# EUROPEAN PATENT APPLICATION

(11) **EP 0 945 396 A2**
(43) Date of publication of application: **29.09.1999**
(21) Application number: 99830120.4
(22) Date of filing: 05.03.1999
(51) Int. Cl.: B66F 9/065

(54) **A vehicle with a lifting boom, having an engine inclined with respect to the longitudinal axis of the vehicle**

(30) Priority: 27.03.1998 IT TO980270
(71) Applicant: MERLO S.P.A. Industria Metalmeccanica, 12020 Frazione San Defendente di Cervasca (Cuneo) (IT)
(72) Inventor: Merlo, Amilcare, c/o Merlo Spa, 12020 Fraz. S. Defendente Cervasca (CN) (IT); Galfre, Renato, c/o Merlo Spa, 12020 Fraz. S. Defendente Cervasca (CN) (IT)
(74) Representative: Marchitelli, Mauro

(57) **Abstract**

A vehicle having a lifting boom, comprising a load-carrying frame (12) having a front section (12a) and a rear section (12b), a lifting boom (22) articulated to the frame in the rear section (12b) and extending parallel to the longitudinal axis of the vehicle, a control and driving cab (28) arranged on a first side of the lifting boom (22) and an internal combustion engine (30) arranged on the opposite side of the boom (22) with respect to the control cab (28).

The engine 30 is arranged with its own longitudinal axis (36) inclined with respect to the longitudinal axis of the vehicle (10).

## Description

The present invention relates to a vehicle having a lifting boom, of the type comprising a load-carrying frame having a front section and a rear section, a lifting boom articulated to the frame in the rear section and extending parallel to the longitudinal axis of the vehicle, a control and driving cab placed on a side of the lifting boom and an internal combustion engine arranged on the opposite side of the boom with respect to the control cab and housed between the wheels of that side.

A vehicle of this type is known for example from EP-A-0375705 of the same Applicant. In this known solution, the engine is arranged with its own longitudinal axis parallel and spaced out with respect to the longitudinal axis of the vehicle. Many difficulties are found when a known vehicle of this type has to be equipped with a mechanically driven power take-off placed, as usual, along the vehicle central longitudinal axis, due to the fact that the engine is shifted with respect to the vehicle central axis. Normally, when a vehicle of the type mentioned above has to be provided with a power take-off, an hydraulic power take-off is used, supplied with pressurised fluid coming from the vehicle main hydraulic assembly and mechanically disengaged from the internal combustion engine. However, a hydraulic power take-off has several limitations with respect to a mechanical power take-off, mainly from the point of view of the transmissible power.

The object of the present invention is to overcome the above drawbacks and the subject of the invention is a vehicle of the above-mentioned type, characterized in that the engine is arranged with its own longitudinal axis inclined with respect to the longitudinal axis of the vehicle.

This arrangement enables a power take-off to be driven by a mechanical transmission connected to the output shaft of the engine. Furthermore, by virtue of this arrangement, the engine can be articulated to the frame about a substantially vertical axis and can be easily brought in a substantially transversal position for increasing accessibility to the engine or to some parts of the vehicle during maintenance operations.

Further characteristics and advantages of the vehicle according to the present invention will become clear in the course of the detailed description which follows, given purely by way of non-limiting example, with reference to the appended drawings, in which:
- figure 1 is a plan schematic view of a vehicle according to the present invention,
- figure 2 is a plan view similar to figure 1, showing an alternative embodiment of the vehicle according to the invention, and
- figure 3 is a side elevational view of the vehicle of figure 1.

Referring to the drawings, 10 indicates a vehicle comprising a load-carrying frame 12 having a front section 12a and a rear section 12b. The frame 12 carries a front axle and a rear axle 16 carrying respective front wheels 18 and rear wheels 20 which can all be both driving and steering wheels.

The vehicle 10 is provided with a lifting boom 22 which is articulated to the frame rear section 12b about a transversal axis 24. The lifting boom 24 extends parallel to the longitudinal axis of the vehicle and has a free end provided with an attachment section 26 which, in the completely lowered position shown in the figures, projects beyond the vehicle front end. Implements of various type (not shown) such as for example a fork, a shovel or an aerial platform can be mounted on the attachment section 26 of the boom 22. In the great majority of applications, the boom 22 is telescopic and is provided with hydraulic cylinders (not shown) for raising and lowering the boom about the articulation axis 24, and for extending the telescopic portion.

A control and driving cab 28 in which are arranged driving control means (driving wheel, brake, friction clutch and accelerator pedal, etc.) as well as all mechanical, electrical and hydraulic control systems and devices for controlling all the functions of the vehicle, is arranged on one side of the lifting boom 22.

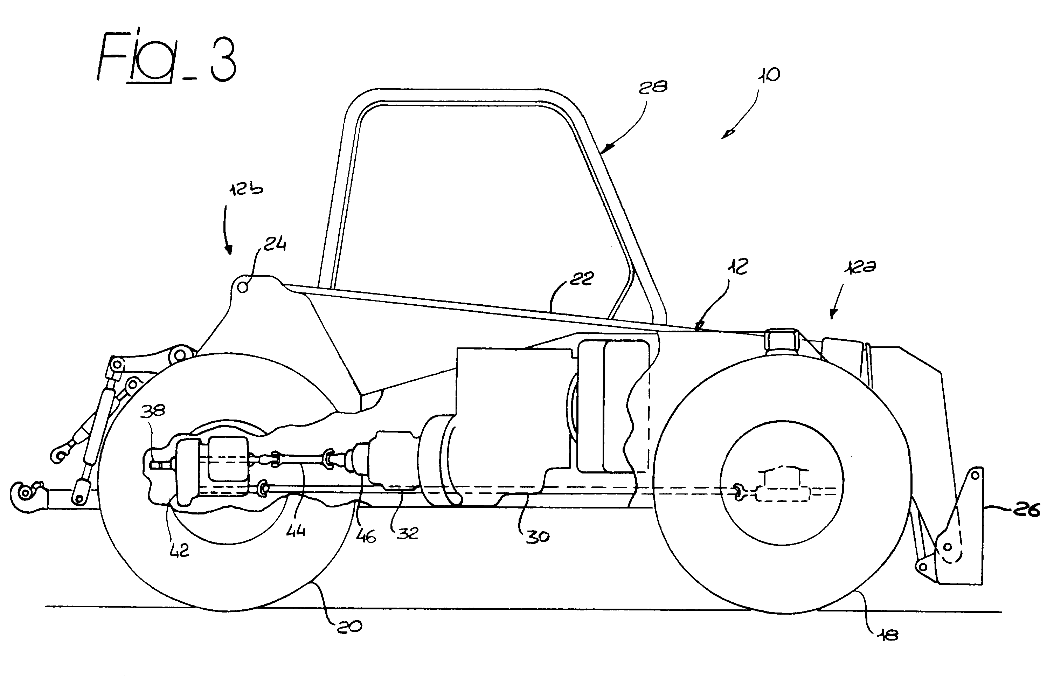

On the opposite side of the lifting boom 22 with respect to the control cab 28 an internal combustion engine 30 is arranged. The engine 30 carries a hydraulic assembly 32 whose rotor is fixed to the output member of the engine 30. The hydraulic assembly 32 is essentially formed by one or more hydraulic pumps the first of which is used for supplying a hydraulic motor (not shown) which moves the driving wheels by means of a mechanical transmission including, for example, a longitudinal transmission shaft connected to axle shafts of the front and rear wheels by means of respective differential gears (not shown). The second pump, if present, supplies all the other hydraulic devices of the vehicle, including the cylinders for actuating the boom 22. The engine 30 and the respective hydraulic assembly 32 are enclosed in a housing 34 having doors which can be opened (not shown) and are arranged between the two wheels 18, 20 of that side of the vehicle. In order to prevent obstructions to the operator's lateral visibility, the engine 30 is arranged below a plane passing for the top of the lifting boom 22 when the latter is in its completely lowered position (see figure 3).

According to the present invention, the engine 30 is arranged with its own longitudinal axis 36 inclined with respect to the longitudinal axis of the vehicle. The inclination angle depends on the longitudinal and transversal dimensions of the engine-hydraulic pump assembly and in the great majority of applications it can be comprised between 10° and 30°. This disposition of the engine enables a power take-off 38 aligned to the longitudinal axis of the vehicle to be driven by a mechanical transmission.

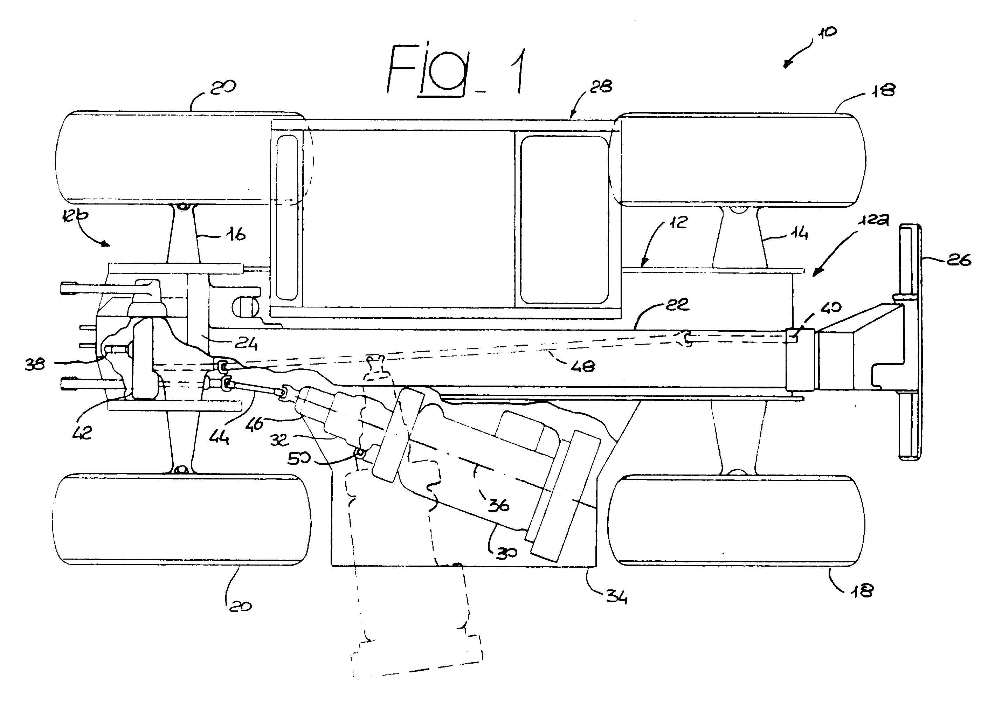

In the example shown in figures 1 and 3, the vehicle 10 is provided with a rear power take-off 38 and with a front power take-off 40. The rear power take-off 38 is connected to a reduction gear 42 which is driven by a cardan shaft 44 connected to the rotor of the hydraulic assembly 32 by means of a multiple-disk clutch 46. The front power take-off 40 is driven by a cardan shaft 48 connected to the reduction gear 42.

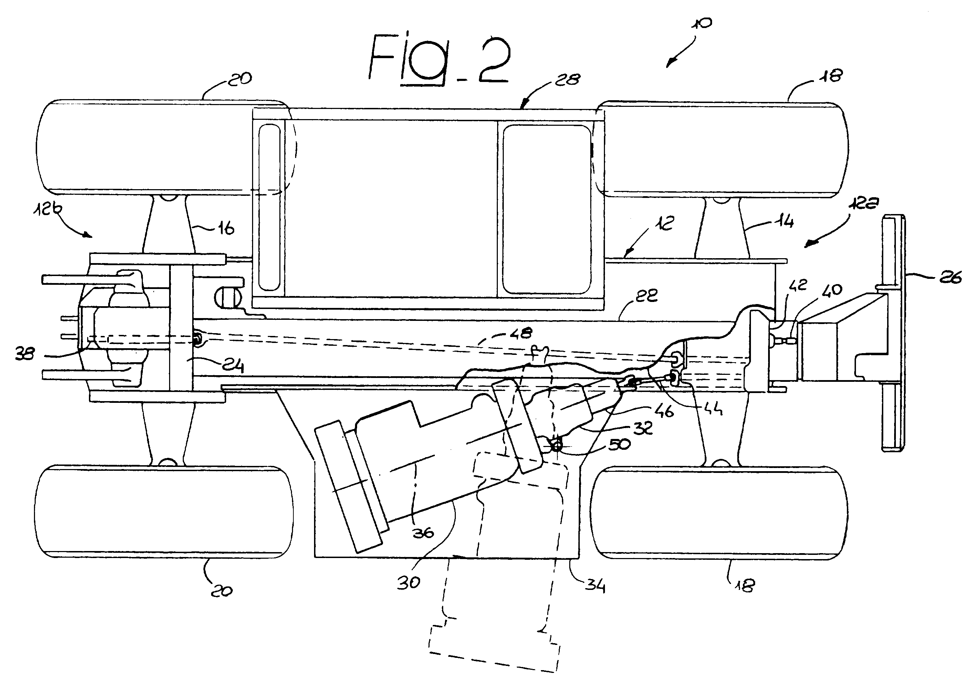

In the alternative embodiment shown in figure 2, the longitudinal axis 36 of the engine 30 is directed towards the front portion of the vehicle. In this case, the front power take-off 40 is directly connected to the reduction gear 42 which is connected to the rotor of the hydraulic assembly 32 by means of the cardan shaft 44 and the multiple disk clutch 46. In this case the rear power take-off 42 is driven by the transmission cardan shaft 48 connected to the reduction gear 42.

In both embodiments, the engine-hydraulic pump assembly is preferably articulated to the frame 12 about a substantially vertical axis 50 placed on the outer side of the hydraulic assembly 32. The engine 30 is in addition fixed to the frame by means of screws or similar removable fastening means and, after having disengaged the cardan shaft 44 from the clutch 46, the whole assembly can rotate about the articulation axis 50 in order to simplify maintenance operations on the parts placed on the inner side of the engine, as shown in broken lines in figures 1 and 2. In the oscillated position the longitudinal axis of the engine 30 extends in a substantially transversal direction with respect to the longitudinal axis of the vehicle. Naturally, this rotation is possible only after having opened or removed the doors forming the engine housing 34. As shown in figures 1 and 2, in the oscillated position of the engine there is a wide access space which renders easier operations on the inner side of the engine and on the vehicle parts placed behind the engine. It is possible to operate on the outer side of the engine when the latter is in its normal operating position, without the need to move the engine.

## Claims

1. A vehicle having a lifting boom, comprising:
- a load-carrying frame (12) having a front section (12a) and a rear section (12b) and provided with a front and a rear axle (14, 16), each of which has a pair of wheels (18, 20),
- a lifting boom (22) articulated to the frame (12) in the rear section (12b) and extending along the longitudinal axis of the vehicle,
- a control and driving cab (28) arranged on one side of said boom (22), and
- an internal combustion engine (30) arranged on the opposite side of the boom (22) with respect to the control cab (28) and housed between the wheels (18, 20) of that side,
characterized in that the engine (30) is arranged with its own longitudinal axis (36) inclined with respect to the longitudinal axis of the vehicle.

2. A vehicle according to claim 1, characterized in that the engine has an output member which is connected for rotation to the rotor of an hydraulic assembly (32) which is connected by means of a shaft (44) to a mechanical power take-off (38, 40).

3. A vehicle according to claim 2, characterized in that it comprises a friction clutch (46) placed between the shaft operating the power take-off and the rotor of the hydraulic assembly (32).

4. A vehicle according to claim 1, characterized in that the longitudinal axis (36) of the internal combustion engine (30) is directed towards the rear section (12b) of the vehicle (10).

5. A vehicle according to claim 1, characterized in that the longitudinal axis (36) of the engine (30) is directed towards the front section (12a) of the vehicle (10).

6. A vehicle according to any of claims 2 to 5, characterized in that it comprises a rear power take-off (38) and a front power take-off (40) connected to each other by a transmission shaft (48).

7. A vehicle according to claim 1, characterized in that the engine (30) is articulated to the frame (12) about a substantially vertical axis (50) and can be moved between a normal operating position and a maintenance position.

8. A vehicle according to claim 7, characterized in that said axis of articulation of the engine (30) is placed on the outer side of an housing of an hydraulic assembly (32) fixed to the internal combustion engine.
